## Europäisches Patentamt
## European Patent Office
## Office européen des brevets

(19)

(11) Numéro de publication: **0 185 608**

**A1**

(12)

# DEMANDE DE BREVET EUROPEEN

(21) Numéro de dépôt: **85630223.7**

(22) Date de dépôt: **12.12.85**

(51) Int. Cl.⁴: **C 04 B 40/06**

(30) Priorité: **14.12.84 LU 85682**

(43) Date de publication de la demande:
**25.06.86 Bulletin 86/26**

(84) Etats contractants désignes:
**AT BE CH DE FR GB IT LI LU NL SE**

(71) Demandeur: **Santini, Alfio**
**125, rue Klensch**
**L-3250 Bettembourg(LU)**

(72) Inventeur: **Santini, Alfio**
**125, rue Klensch**
**L-3250 Bettembourg(LU)**

(74) Mandataire: **Waxweiler, Jean et al,**
**OFFICE DENNEMEYER S.à.r.l. 21-25 Allée Scheffer**
**P.O.Box 41**
**L-2010 Luxembourg(LU)**

(54) **Liant pour mortier à base de ciment et chaux de construction.**

(57) Du ciment et de la chaux de construction sont mélangés à des proportions déterminées dans une usine et livré p. ex. dans des sacs de papier de 50 kgs.. afin d'éviter, que, sur les chantiers de constructions, les ouvriers doivent procéder à la mise en oeuvre simultanée d'une partie d'un sac de ciment pur et d'une partie d'un sac de chaux de construction pur, ce qui en pratique représente une procédure embarrassante et peu précise à effectuer à chaque reprise que le cahier de charge d'une oeuvre exige la confection d'un mortier souple sur base d'un mélange de ciment et de chaux.

EP 0 185 608 A1

LIANT POUR MORTIER DE CONSTRUCTION

L'invention concerne un liant prêt à l'emploi destiné à la préparation de mortier de construction à base de ciment et de chaux de construction.

Suivant les définitions usuels le mortier est un mélange homogène d'un liant avec une proportion variable de sables et d'eau. Il est préparé mécaniquement au cours d'une seule opération de malaxage.

L'emploi des liants varie suivant les différentes catégories de mortiers.

Les chaux de construction (p.ex. blanche, dolomitique, hydraulique, etc.) souvent employées en mélange avec du ciment, (p.ex. Portland, Portland de fer, haut-fourneau, etc.) ont pour effet de changer les résistances mécaniques du ciment. La diminution de la résistance à la compression est accompagnée d'une diminution de la résistance à la flexion. Le mortier devient plus souple, et les risques de fissures p.ex. dans les enduits sont diminués.

L'addition de chaux en supplément au ciment ralentit la prise du mortier avec le fond, et de fait augmente l'adhérence finale. Cette réaction préconise l'addition de la chaux dans presque toutes les sortes de mortier pour travaux de maçonnerie, de chape, de pose ou d'enduit.

L'addition de chaux en supplément au ciment facilite le passage de l'humidité à travers les enduits de façade, et élimine la détérioration de la façade par détachement de plaque souvent due à l'accumulation d'humidité derrière les enduits à haute concentration de ciment.

Les bétonnières des entreprises du bâtiment utilisées normalement sur les chantiers et servant au malaxage des liants avec les sables et l'eau sont conçues pour 240 litres de mortier sur la base de 3 brouettes à 80 litres ainsi que d'un sac de liant de 50 kgs.

Pour la préparation des mortiers qui exigent pour diverses raisons l'addition de chaux en ciment, deux sacs à 50 kgs., l'un de ciment, l'autre de chaux, doivent être mis en oeuvre peu à peu, le maçon enlevant les quantités respectives avec la pelle dans chaque sac pour les adjoin- dres aux agrégats et à l'eau se trouvant dans la bétonnière.

C'est une procédure embarrassante et peu précise et sujette à de larges variations des proportions de chaux et de ciment dans le mortier fini suivant la personne préparant le mortier, de sorte que le mortier préparé n'a finalement pas les caractéristiques désirées ou prescrites par le cahier de charge.

Afin de remédier à ces inconvénients on a déjà proposé des mortiers prêts à l'emploi contenant sous forme de mélange les sables, les liants et, le cas échéant, des adjuvants pour des caractéristiques spéciales désirées du mortier. Il suffit d'ajouter lors de l'emploi la quantité d'eau requise et le mortier est prêt. Des exemples de ce genre de mélanges sont décrits p. ex. dans US-A-2 611 713 et FR-A-2 228 734. Cependant ces mélanges ne se sont imposés que pour des petits travaux de maçonnerie, d'enduit, etc. Lors de leur mise en oeuvre pour la construction de maison entière, ils s'avèrent trop chers, à cause des grandes masses de sables à sécher pour que le mélange préparé ne soit pas durci avant qu'il ne soit employé.

On a également proposé de préparer le mélange des sables, de ciment, de chaux et d'eau dans une usine de malaxage dans les proportions désirées, de transporter le mélange sur le chantier où il est utilisé pour maçonner un mur ou appliquer en enduit. Vu que seulement des petites quantités peuvent ainsi être préparées, parce qu'autrement le mortier aura durci avant d'être utilisé par le maçon pour le travail qu'il exécute, cette manière de préparer le mortier afin d'obtenir de façon continue un mortier à caractéristique particulière n'est pas pratique.

Le but de l'invention est de permettre au maçon de préparer un mortier à base de chaux et de ciment ayant des caractéristiques bien définies, ces caractéristiques n'étant pas exposées aux variations connues dans l'état de la technique et les frais de la préparation de ce mortier fini restant quand même dans des limites tolérables, même pour la préparation de grandes quantités de mortier.

Selon l'invention, ce but est réalisé par un liant qui contient du ciment et de la chaux de construction prémélangés de façon homogène dans des proportions fonction de l'utilisation finale du liant de sorte à permettre d'obtenir un mortier normalisé ou spécial aux caractéristiques prescrites après addition du liant aux autres composant d'un tel mortier normalisé ou spécial y compris l'eau, le liant, les autres composantes et l'eau étant mis en oeuvre dans les quantités prescrites.

Le liant est avantageusement conditionné sous forme d'unités du poids unitaire permettant de préparer avec chaque unité de liant une quantité unitaire de mortier.

Suivant l'utilisation du mortier, des adjuvants chimiques peuvent être ajoutés pour améliorer une ou plusieures propriétés différentes du mortier à préparer.

Les avantages apportés par l'invention sont aussi bien d'ordre économique que d'ordre technique.

L'avantage technique consiste dans le fait que les compositions des mortiers, aussi bien normalisées que spéciales, puissent être respectées plus facilement du fait qu'on évite aux ouvriers de faire des mélanges approximatifs en comptant les coups de pelle. Le sac du mélange fini malaxé à 3 brouettes à 80 litres fournira toujours un mélange uniforme et évitera de grandes différences entre des mortiers malaxés successivement.

Du point de vue économique, la différence de prix entre les sacs de ciment pur, voir de chaux pur, ainsi que des sacs du produit mélangé (résultant nécessairement des travaux de manutention et autres affinages en usine) sera largement compensée par le gain de temps pour l'entreprise du bâtiment qui utilisera le liant prémélangé.

La préparation du liant sera maintenant décrite à titre d'exemple. A partir de deux silos de stockage, les différents composants, c.-à-d. le ciment et la chaux sont pressés par deux vis sans fin, de dimensions identiques et fonctionnant à vitesse égale, à travers deux ouvertures diaphragmiques (réglables en vue de différentes compositions) dans un malaxeur, d'où le mélange fini est extraite pour être guidé vers un endroit de stockage ou une machine

- 4 -                                                           0185608

d'ensachage. Suivant le réglage des deux ouvertures diaphragmiques on obtient après malaxage un liant pour mortier de construction à base de ciment et de chaux de construction prêt à l'emploi, prémélangé à différentes compositions normalisées, p. ex. 50/50, ou 35/65 ou 25/75, ainsi qu'à des compositions spéciales suivant les cahiers de charge des maîtres d'oeuvre. Le liant peut être conditionné sous forme de masses d'un poids unitaire de p. ex. 50 kg et ensaché.

Indépendamment des quantités de mortier mise en oeuvre par l'entreprise chargée de l'exécution de la commande, d'un travail de maçonnerie, d'enduit, etc, ainsi que indépendamment du domaine d'application du mortier, l'addition du liant ainsi préparé aux quantités prescrites de sables et d'eau permet de rapprocher sans problèmes majeurs sur les chantiers les résultats réalisés en laboratoires. Ainsi un sac de 50 kg de liant malaxé avec 3 brouettes à 80 litres de sables et de l'eau permet d'obtenir, suivant la composition du liant, des mortiers aux mêmes caractéristiques spécifiques pour des mortiers malaxés successivement.

Si on ajoute au liant des adjuvants chimiques, le mortier préparé aura d'autres propriétés améliorées.

**0185608**

REVENDICATIONS

1.      Liant prêt à l'emploi destiné à la préparation de mortier de construction à base de ciment et de chaux de construction, caractérisé en ce qu'il contient du ciment et de la chaux de construction prémélangés de façon homogène dans des proportions fonction de l'utilisation finale du liant de sorte à permettre d'obtenir un mortier normalisé ou spécial aux charactérististiques prescrites après addition du liant aux autres composantes d'un tel mortier normalisé ou spécial y compris l'eau, le liant, les autres composants et l'eau étant mis en oeuvre dans les quantités prescrites.

2.      Liant selon la revendication 1, caractérisé en ce que le liant est conditionné sous forme d'unités d'un poids unitaire permettant de préparer avec chaque unité de liant une quantité unitaire de mortier.

3.      Liant selon la revendication 1 ou 2, caractérisé en ce que des adjuvants chimiques sont ajoutés, lesdits adjuvants chimiques étant adaptés pour améliorer une ou plusieures propriétés différentes du mortier à préparer.

Office européen
des brevets

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | DE-A-2 937 835 (H. OHSMANN)<br>* Page 3, lignes 13-21 * | 1-3 | C 04 B 40/06 |
| Y | US-A-2 611 713 (A.G. GLICK)<br>* Colonne 1, ligne 19 - colonne 2, ligne 3 * | 1-3 | |
| A | FR-A-2 228 734 (TILING CONSTRUCTION SERVICES)<br>* Page 1, lignes 1-21 * | 1-3 | |
| A | US-A-2 733 995 (W.D. ROBINSON)<br>* Revendication 7 * | 1-3 | |

-----

|  |
|---|
| DOMAINES TECHNIQUES RECHERCHES (Int Cl 4) |
| C 04 B 28/00<br>C 04 B 40/00<br>C 04 B 7/00 |

Le present rapport de recherche a ete etabli pour toutes les revendications

| Lieu de la recherche | Date d achevement de la recherche | Examinateur |
|---|---|---|
| LA HAYE | 19-03-1986 | DAELEMAN P.C.A. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : theorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82